# Europäisches Patentamt

# European Patent Office

# Office européen des brevets

(11) Publication number: **0 107 985**
**B1**

(12) ## EUROPEAN PATENT SPECIFICATION

(45) Date of publication of patent specification: **26.08.87**

(51) Int. Cl.⁴: **G 11 B 5/70**

(21) Application number: **83306619.4**

(22) Date of filing: **31.10.83**

(54) Magnetic recording medium.

(30) Priority: **29.10.82 JP 190276/82**

(43) Date of publication of application:
**09.05.84 Bulletin 84/19**

(45) Publication of the grant of the patent:
**26.08.87 Bulletin 87/35**

(84) Designated Contracting States:
**DE FR GB**

(56) References cited:
**EP-A-0 038 424**
**DE-A-2 326 258**
**DE-A-2 705 835**
**DE-A-3 010 976**
**DE-A-3 024 078**
**FR-A-1 197 239**
**FR-A-2 143 095**
**GB-A-2 073 766**
**GB-A-2 101 911**
**US-A-4 335 183**

The file contains technical information
submitted after the application was filed and
not included in this specification

(73) Proprietor: **KONISHIROKU PHOTO INDUSTRY
CO. LTD.
No. 26-2, Nishishinjuku 1-chome Shinjuku-ku
Tokyo 160 (JP)**

(72) Inventor: **Nakamura, Issei
669-6 Ishikawa-cho
Hachioji-shi Tokyo (JP)**
Inventor: **Itozawa, Kenji
2-5-19 Owada-cho
Hachioji-shi Tokyo (JP)**

(74) Representative: **Ellis-Jones, Patrick George
Armine et al
J.A. KEMP & CO. 14 South Square Gray's Inn
London WC1R 5EU (GB)**

Courier Press, Leamington Spa, England.

## Description

### Background of the invention

The present invention relates to the improvement of magnetic recording media and more particularly to magnetic recording media for high frequency wave recording suitable for use in ultrahigh density magnetic recording which is higher in density than the recording in ordinary video signals and audio signals.

To raise the recording density and the sensitivity of the magnetic recording medium, the support base is coated with a magnetic layer comprising a binder in which are dispersed ferromagnetic powder whose squareness ratio (i.e., residual magnetic flux density Br/saturation magnetic flux density Bm) is great and both Br itself and coercive force Hc are great. For the required squareness ratio and Hc, in this case, magnetic powder with an iron oxide group such as cobalt adsorbed $\gamma$-$Fe_2O_3$ and metallic magnetic powder such as Fe and Fe-Co-Ni are used as the ferromagnetic powder in the magnetic layer. Metallic magnetic powder is especially suitable as the ferromagnetic powder with a high squareness ratio and Hc. Hc of these metallic magnetic powders is usually 1000 Oe or so (71.6—95.5 kA/m) (900—1200 Oe) which has not previously been found suitable for high frequency wave recording of the density required in ordinary video signals and audio signals.

However, when a higher density recording is required, such as for 8 mm video, a magnetic recording medium whose Hc is not much greater than 79.6 kA/m (1000 Oe) or so is easily affected and it is difficult to maintain the recording because repeated signals are constantly given to the recording medium in an ON/OFF mode. Further, aforesaid ferromagnetic powder comprises acicular crystals whose major axis is 0.3—0.9 µm, and whose minor axis is 0.05—0.1 µm with an acicular ratio Ra (i.e., major axis/minor axis ratio) of from 5 to 10 which is great and therefore, if the ferromagnetic powder is finely granulated to obtain a high Hc, the crystals become brittle and Hc in the magnetic layer is irregular, which causes magnetic transferring for stacking. Further, to raise the degree of orientation in the ferromagnetic powder having a high acicular ratio, the powder is more finely granulated and thus a greater orienting magnetic field is needed. Accordingly the surface of the magnetic layer becomes rough, the saturation magnetic flux density Br becomes small and thereby the recording medium is easily saturated, thus ferromagnetic powder having a high acicular ratio is not suitable for high sensitivity, high output, high density recording.

### Summary of the invention

The present invention has been devised attempts to reduce or overcome these disadvantages in conventional magnetic recording media and to provide a magnetic recording medium for high frequency waves capable of being used for ultrahigh density recording such as an 8 mm video.

The present invention provides a magnetic recording medium having a magnetic layer comprising ferromagnetic powder on support base, wherein said ferromagnetic powder is a metallic ferromagnetic powder with an average grain size of not more than 0.5 µm (measured along the major axis of the particles), with an acicular ratio Ra of from 1.3 to 4.5 and a coersive force Hc of from 107.4 to 127.3 kA/m (1350 Oe to 1600 Oe).

As ferromagnetic powder to be contained in the magnetic layer of the magnetic recording medium in the present invention metallic ferromagnetic powder such as Fe, Co, Ni, Cr, Fe-Co-Ni, Fe-Ni-Zn, Fe-Mn-Zn, Fe-Al, MnBi, Fe-Al-P, Fe-Co-Fe-Co-Ni-P, Ni-Co, Fe-Ni, Fe-Ni-Mn, Co-Ni-P, Co-P, Fe-Ni-Cr-P or Fe-Ni-Co-Zn, for example, may be used independently or in combination and especially the ferromagnetic powder containing Fe of more than 60% by weight, more preferably 80% by weight, is preferable. Further, as an additive to be added in small amount to aforesaid metallic ferromagnetic powder, one or more chemical elements such as Mg, Mn, Si, P or Cu, for example, and compounds thereof may be used. For the high density recording, the grain size of aforesaid ferromagnetic powder is not more than 0.5 µm and preferably it is not more than 0.3 µm.

Ferromagnetic powder having the desired characteristics can be obtained using known procedures. For example US Patent 4202871 describes how various axial ratios can be obtained. The coercive force of a cobalt-adsorbed gamma ferric oxide, for instance, can be varied with the amount of cobalt adsorbed. For example, gamma ferric oxide may be dispersed in an aqueous alkaline solution in which varying amounts of cobalt dichloride, cobalt sulphate and ferrous sulphate, for instance, are dissolved and the dispersion oxidised in the air. For metal or metal-alloy powders, metallic iron, ferric oxide or goethite (an iron peroxide), for instance, can be reduced with varying amounts of hydrogen to provide metal powder with different coercive forces and with different acicular ratios. Various elements such as phosphorus, silicon, copper and nickel can be incorporated.

As a material for the support base, polyesters such as polyethylene terephthalate or polyethylene-2, 6-naphthalate, polyolefins such as polypropylene, cellulose derivatives such as cellulose triacetate or cellulosediacetate, plastics in various kinds such as polycarbonate polyvinylchloride, polymide or nylon, non-magnetic metals such as Al or Zn or ceramics may be used.

The thickness of such a support base is about 3—100 µm, preferably 5—50 µm for the film and sheet type and 30 µm-10 mm or so for the disk and card type and for the drum type, it will be a cylindrical shape the type of which may be decided according to the recorder to be used.

2

**0 107 985**

To prevent static and transferrance of the aforesaid support base, the surface thereof opposite to the one on which the magnetic layer is provided may be given a so-called backcoating.

Backcoating is described in the specifications of U.S. Patent Nos. 2,804,401, 3,293,066, 3,617,378, 3,062,676, 3,734,772, 3,476,596, 2,643,048, 2,803,556, 2,887,462, 2,923,642, 2,997,451, 3,007,892, 3,041,196, 3,115,420, 3,166,688.

The type of the support may be e.g., tape, sheet, card, disk or drum and the material of the support may be selected according to the type of support used.

As binder, conventional known thermoplastic resins, thermosetting resins radiation curable resins or electron-irradiation-setting resins or a mixture thereof may be used.

Thermoplastic resins having a softening temperature of 150°C or less, average molecular weight of 10,000—200,000 and degree of polymerization of about 200—2,000 such as, vinyl chloride-vinyl acetate copolymer, vinyl chloride-vinylidene chloride copolymer, vinyl chloride-acrylonitrile copolymer, acrylic acid ester-acrylonitrile copolymer, acrylic acid ester-vinylidene chloride copolymer, acrylic acid ester-styrene copolymer, methacrylic acid ester-acrylonitrile copolymer, methacrylic acid ester-vinylidene chloride copolymer, methacrylic acid ester-styrene copolymer, urethane elastomer, vinyl polyfluoride, vinylidene chloride-acrylonitrile copolymer, acrylonitrile-butadiene copolymer, polyamide resin, polyvinylbutyral, cellulose derivatives (cellulose acetate butyrate, cellulose diacetate, cellulose triacetate, cellulose propionate, nitrocellulose), styrene-butadiene copolymer, polyester resin, chlorovinyl ether-acrylic acid ester copolymer, amino resin or thermoplastic resins of synthetic rubber of every kind or a mixture thereof, are used.

These resins are described in JP—B—Nos. 6877/1962, 12528/1964, 19282/1964, 5349/1965, 20907/1965, 9463/1966, 14059/1966, 16985/1966, 6428/1967, 11621/1967, 4623/1968, 15206/1968, 2889/1969, 17947/1969, 18232/1969, 14020/1970, 14500/1970, 18573/1972, 22063/1972, 22064/1972, 22068/1972, 22069/1972, 22070/1972, 27886/1973, and U.S. Patent Nos. 3,144,352, 3,419,420, 3,499,789 and 3,713,887.

The thermosetting resins or radiation curable resins, have a the molecular weight in the liquid state as coated of not more than 200,000 which becomes infinite after coating and drying owing to the condensation or addition reaction Among these resins, one that does not soften or melt during the period of pyrolysis thereof is preferable. Preferable resins include, for example, a phenolic resin, polyurethane-setting resin, urea resin, melamine resin, alcid resin, silicone resin, acrylic reaction resin, mixture of high molecular weight polyester resin and isocyanateprepolymer, mixture of methacrylate copolymer and diisocyanate prepolymer, mixture of polyesterpolyol and polyisocyanate, urea formaldehyde resin, mixture of low molecular weight glycol/high molecular weight diol/triphenylmethane triisocyanate and polyamine resin and mixtures thereof.

These resins are described in JP—B—Nos. 8103/1964, 9779/1965, 7192/1966, 8016/1966, 14275/1966, 18179/1967, 12081/1968, 28023/1969, 14501/1970, 24902/1970, 13103/1971, 22067/1972, 22072/1972, 22073/1972, 28045/1972, 28048/1972, 28922/1972, and U.S. Patent Nos. 3,144,353, 3,320,090, 3,437,510, 3,597,273, 3,781,210 and 3,781,211.

Electron-irradiation-setting resins include unsaturated prepolymers such as a maleic anhydride type, urethaneacryl type, polyesteracryl type, polyetheracryl type, polyurethaneacryl type and polyamideacryl type or multifunctional monomer such as etheracryl type, urethaneacryl type, phosphoric esteracryl type, aryl type and hydrocarbon type.

These binders are used independently or in combination, and additives may be added if necessary.

The proportion of ferromagnetic powder to binder used is from 5 to 400 parts, and preferably 10 to 100 parts by weight of binder to 100 parts by weight of the ferromagnetic powder. If the binder is used in excess to produce a magnetic recording medium, the recording density of the recording medium is lowered. If insufficient binder is used the strength of a magnetic layer is weakened and unfavorable phenomena such as the deterioration of durability and shedding will occur.

To make the ferromagnetic recording medium more durable, various hardening agents such as a polyisocyanate, may be contained in a magnetic layer.

Such polyisocyanates include the addition product of diisocyanate and tervalent polyol, or decarboxylated compound of diisocyanate pentamer/3 mole of diisocyanate/water.

The Examples thereof include an addition product of 3 mole of tolylene diisocyanate/1 mole of trimethylol propane, addition product of 3 mole of methaxylylene diisocyanate/1 mole of trimethylol propane, tolylenediisocyanate pentamer, pentamer comprising 3 mole of tolylene diisocyanate/2 mole of hexamethylene diisocyanate, decarboxylated product obtainable by making 3 mole of hexamethylene diisocyanate react with 1 mole of water. These may readily be prepared or an industrial scale.

Magnetic layers may also be added to the ferromagnetic powder, the described binders, hardening agents, and moreover, an additive such as a dispersant, coupling agent, lubricant, head cleaning agent or antistatic agent may be included.

The dispersant used, may be fatty a fatty acid having 8 to 18 carbon atoms such as caprylic acid, capric acid, lauric acid, myristic acid, palmitic acid, stearic acid, oleic acid, elaidic acid, linolic acid or linolenic acid, which is represented by R—OOH, wherein R represents a saturated or unsaturated hydrocarbon radical having 7 to 17 carbon atoms; a metallic soap comprising an alkali metal of the described fatty acids such as Li, Na or K, or an alkaline earth metal such as Mg, Ca or Ba. A higher alcohol having not less than 12 carbon atoms or a sulfate can also be used. These dispersing agents may be used independently or in

3

combination. These dispersing agents are added in an amount of 1 to 20 parts by weight to 100 parts by weight of the described powder.

The lubricants, used may be e.g., silicon oil, graphite, molybdenum disulfide, tungsten disulfide, a fatty acid ester comprising a monobasic fatty acid having 12 to 16 carbon atoms and a monovalent alcohol having 3 to 12 carbon atoms, or fatty acid ester comprising a monobasic fatty acid having 17 carbon atoms or more and a monovalent alcohol whose number of carbon atoms is 21 to 23 when the number of carbon atoms of aforesaid fatty acid is added thereto. These lubricants may be added in an amount of 0.2 to 20 parts by weight thereof to 100 parts by weight of the described powder.

The abrasives may be fused alumina, silicon carbide, chromium oxide, corundum, artificial corundum, diamond, artificial diamond, garnet or emery. The have an average particle size of 0.05 to 5 μm and more preferably, 0.1 to 2 μm, and are added in an amount of 1 to 20 parts by weight to 100 parts by weight of the powder.

The antistatic agents used may be electroconductive powders such as graphite, carbon black, tin oxide-antimonium oxide type compounds, tin oxide-titanium oxide-antimonium oxide type compounds or carbon black graft polymer; natural surface active agents such as saponin; nonionic surface active agents such as that of alkylene oxide type, glycerol type or glycidol type; cationic surface active agents such as that of higher alkylamine type, quaternary ammonium salt type or heterocyclic type such as pyridine, phosphonium or sulfonium type; anionic surface active agents containing an acid radical such as carbonic acid, sulfonic acid, phosphoric acid, sulfate or phosphate; or surface active agents such as that of the amino acid type, aminosulfonic acid type or sulfate or phosphate of amino alcohol.

The surface active agents may be added independently or in combination. These surface active agents are to be used as antistatic agents, and there are also some instances where they are used with other purposes, for example, dispersing or improving the magnetic characteristics and lubricity, and serving as a coating aid.

To improve the dispersibility of magnetic powders, it is useful to use either a method to prepare the processed magnetic powder by processing aforesaid ferromagnetic powder with coupling agents in advance or a method wherein aforesaid ferromagnetic powder and coupling agents are added to magnetic coatings and are kneaded with binders.

As coupling agents, titanate group coupling agents and silane group coupling agents are typically available but the preferable coupling agent for the ferromagnetic powder is a titanate group coupling agent which includes isopropyltri-isostearoyltitanate, isopropyldi - stearoylmethacryltitanate, isopropyldi - methacrylisostearoyltitanate, isopropyltri-cumylphenyltitanate, isopropyltri(dioctyl pyrophosphate)- titanate, isopropyltri-dodecylbenzenesulphonyltitanate, isopropyldi-isostearoylacryltitanate, isopropyl isostearoyl diacryltitanate, isopropyltri(dioctylphosphate)titanate, isopropyltri(n - stearoyl)titanate, isopropyldi(butylmethylpyrophosphate)titanate, diisostearoyloxyacetatetitanate, isostearoylmetha- cryloxyacetatetitanate, di(dioctylphosphate)oxyacetatetitanate, isopropyltri acryltitanate, isopropyltri- (N,N-dimethyl - ethylamino)titanate, isopropyltri-anthranyltitanate, isopropyloctylbutylpyrophosphate- titanate, diacryloxyacetatetitanate, di(octyl butylpyrophosphate)oxyacetatetitanate, diisostearoylethylene- titanate, isostearoylmethacrylethylenetitanate, di(dioctylphosphate)ethylenetitanate, dimethacryloxy- acetatetitanate, 4 - aminobenzoyl isostearoyloxyacetatetitanate, bis(dioctylpyrophosphate)oxyacetate- titanate, dianthranylethylenetitanate, bis(butyl, methylpyrophosphate)ethylenetitanate, 4 - aminobenzene- sulphonyldodecylbenzenesulphonyl ethylenetitanate, dimethacrylethylenetitanate, 4 - aminobenzoyl- isostearoylethylenetitanate, bis(dioctylpyrophosphate)ethylenetitanate, diacrylethylenetitanate, tetra(2,2 - diacryloxymethyl - 1 - butyl)bis(di - tridecylphosphite)titanate, tetraoctylbis(ditridecylphosphite)titanate, tetraisopropylbis(dioctylphosphite)titanate, for example.

For the formation of the magnetic layer, the composite having aforesaid composition is dissolved in the organic solvent to be coated on the supporting base as a coating solution.

A suitable solvent for the magnetic coatings or an organic solvent to be used for the coating of the magnetic coatings is e.g., a ketone such as acetone, methylethylketone, methylisobutylketone, or cycloehexanone, alcohol such as methanol, ethanol, propanol or butanol, an ester such as methyl acetate, ethyl acetate, butyl acetate, ethyl lactate or glycolacetate monoethylether, a glycolether such as glycolidmethylether or dioxane, a tar group (aromatic hydrocarbon) such as benzene, toluene or xylene or halogenated carbon hydride such as methylenechloride, ethylenechloride, carbontetrachloride, chloroform or dichlorobenzene.

The ferromagnetic powder, binders, dispersing agents, lubricants, abrasives, antistatic agents, solvents and others are kneaded together to become magnetic coatings.

When kneading, aforesaid ferromagnetic powder and aforesaid ingredients are projected into the kneader simultaneously or successively. One method, for example, is to add first the ferromagnetic powder into the solution containing the dispersing agents and knead them for certain period of time and then add the remaining ingredients continuing the kneading and thus prepare the magnetic coatings.

Various types of kneaders are used for kneading and dispersing. For example, the two-roll mill, 3-roll mill, ball mill, pebble mill, sand grinder, Szegvari attriter, high-speed impeller disperser, high-speed stone mill, high-speed impact mill, disperser kneader, high-speed mixer, homogenizer and ultrasonic disperser are available.

The technology relating to kneading and dispersing is described in Paint Flow and Pigment Dispersion

4

written by T. O. Patton (issued by John Wiley & Son Corp. in 1964). It is further described in the specifications of U.S. Patent Nos. 2,581,414 and 2,855,156.

As a coating method for forming a magnetic layer by coating aforesaid magnetic coatings on the support methods such as an air doctor coat, blade coat, air knife coat, squeeze coat, impregnation coat, reverse roll coat, transfer roll coat, gravure coat, kiss coat, cast coat, spray coat are available and in addition to these, other methods are further available and explanations of particular methods are described in detail in "Coating Engineering" (issued by Asakura bookstore in 1971).

The magnetic layer coated on the support by the aforesaid method, after the ferromagnetic powder in the layer is treated for their orientation if necessary, is dried. Further, the surface is smoothed if necessary or cut to the desired shape, thus the magnetic recording media of the present invention are prepared.

In this case, it is desirable that the orientating magnetic field is of about 0.05—0.35 T (500—3500 gauss) in AC or DC, the drying temperature is about 50—100°C and drying time is about 10 seconds to 10 minutes.

The magnetic recording medium thus prepared had excellent abrasion resistance. Further, compared with ferromagnetic powder in the form of acicular crystals with a big acicular ratio, the magnetic recording medium thus prepared had excellent preservability (change with the passage of time) because the usage of ferromagnetic powder containing less edge portion whose activity-degree is high (easily be rusted). Furthermore, the magnetic recording medium of the present invention has a remarkably improved S/N ratio (ratio of signal to noise) against the conventional recording substance and the reproduction output thereof was also higher than that of the conventional one. Owing to the aforesaid excellent characteristics the magnetic recording medium of the present invention showed an excellent performance especially in high density recording.

Detailed description of examples

The present invention will be explained referring to the comparative example and the examples as follows. The description "part" in the comparative example and the example means the "part by weight".

Comparative example

| | |
|---|---|
| Iron magnetic powder (acicular ratio 10, grain size 0.8 μm) | 75 parts |
| Copolymer of partially hydrolyzed vinyl chloride and vinyl acetate ("VAGH" and made by Union Carbide Corp.) | 5 parts |
| Polyurethane resin ("Estane 5701" made by Goodrich Corp.) | 9 parts |
| Titanium coupling agent ("Plen Act 38S" made by Ajinomoto Corp.) | 0.5 parts |
| Methylethylketone | 70 parts |
| Toluene | 60 parts |
| Cyclohexanone | 5 parts |

Above mixture was fully mixed and dispersed in the ball mill and then 5 parts of Colonate L (polyisocyanate solution made by Japan Polyurethane Corp.) were added thereto and thus magnetic coatings were obtained after uniform mixing.

The magnetic coatings thus obtained were coated on one side of polyethyleneterephthalate film of 12 μm thickness with the magnetic field of 0.2T (2000 gauss) being applied thereto so that the thickness after drying would be 5 μm. Samples thus obtained were given a super-calender treatment and then were slitted in the width of 12.65 mm to be a video tape. This sample is designated as No. 0.

Example 1

Iron alloy magnetic powder
(acicular ratio 3, grain size 0.4 μm)     75 parts

VAGH     5 parts

Estan 5701     9 parts

Plen Act 38S     0.5 parts

Methylethylketone     70 parts

Toluene     60 parts

Cyclohexanone     5 parts

Above mixture was fully mixed and dispersed in the ball mill and then 5 parts of polyisocyanate solution (made by Japan Polyurethane Corp.) were added thereto and thus magnetic coatings were obtained after uniform mixing.

The magnetic coatings thus obtained were coated on one side of polyethyleneterephthalate film of 12 μm thickness with the magnetic field of 0.2T (2000 gauss) being applied thereto so that the thickness after drying would be 5 μm.

Wide samples thus obtained were given a super-calender treatment and then were slitted in the width of 12.65 mm to be a video tape which is designated as No. 1.

Examples 2—5

Four groups of iron metal magnetic powder whose grain sizes are commonly 0.4 μm and acicular ratios are 4, 2.5, 3.5 and 4.2 respectively were mixed with VAGH, Estane 5701, Plen Act 38S, methylethylketone, toluene and cyclohexanone in the same composition as above Example 1 respectively and then the mixtures thus obtained were fully mixed and dispersed in the ball mill and then 5 parts of polyisocyanate solution made by Japan Polyurethane Corp. were added thereto and mixed uniformly thus magnetic coatings were prepared. The magnetic coatings thus obtained, after the same treatment as Example 1, were coated on the polyethyleneterephthalate films with 12 μm thickness which were finally slitted to be video tapes with 12.65 mm width which were designated as No. 2, No. 3, No. 4 and No. 5 respectively.

Table 1 below shows acicular ratios and coercive forces Hc of aforesaid iron alloy magnetic powder.

TABLE 1

| | Magnetic material (acicular ratio) | Coercive force kA/m (oersted) |
|---|---|---|
| No-1 | Metal magnetic powder (1:3) | 113.0 (1420) |
| -2 | (1:4) | 120.2 (1510) |
| -3 | (1:2.5) | 111.4 (1400) |
| -4 | (1:3.5) | 116.2 (1460) |
| -5 | (1:4.2) | 123.3 (1550) |
| Comparative sample No. 0 | (1:10) | 118.6 (1490) |

For the comparison of tape performance for the samples No. 0—No. 5 obtained from the aforesaid comparative example and Examples 1—5, radio frequency (RF) output, S/N ratio(dB), chrominance S/N and the degree of gloss were measured and the results thereof are shown in Table-2 below wherein:

(a) RF output

RF outputs for 4M Hz were measured by the use of the VTR deck for the measurement of RF output, in which the output of comparative sample (No. 0) is 0 and measured values of other samples are shown in the relative values against the output of the comparative sample. (The values higher than that of the comparative sample are given the "+" mark and lower ones are given the "−" mark.)

(b) Chrominance S/N

Chrominance signal of 3.58 MHz was set at 0.714Vp-p to make a picture recording by putting the chrominance signal into a brightness signal and then the chrominance signal only was taken out by reproducing the recorded picture to obtain the ratio of the effective value(S) to the noise level which is produced when the chrominance signal is removed. In the table, however, the value of the comparative sample is set at "0" as a standard and the values of other samples are shown as a relative value against the value of the comparative sample.

(c) Degree of gloss

The degree of gloss was measured by the glossmeter (GL-26D made by Murakami Color Research Lab), in which the degree of gloss resulting from the 60-degree reflection on the surface of the standard sample (black tile) is set as 100% and the degrees of gloss on the surfaces of samples to be measured (No. 0, No. 1, No. 2, No. 3, No. 4, and No. 5) are shown with relative values (%) and the higher relative value means the better degree of gloss.

TABLE 2

| Sample No. | RF output[a] | Chrominance S/N[b] | Degree of gloss(%)[c] |
|---|---|---|---|
| Sample of this invention No. 1 | +0.7 | 0.7 | 156 |
| No. 2 | +1.1 | 1.0 | 162 |
| No. 3 | +0.9 | 0.5 | 152 |
| No. 4 | +1.3 | 0.8 | 154 |
| No. 5 | +1.2 | 1.0 | 158 |
| Comparative sample No. 0 | +0 | 0 | 148 |

From the foregoing, it is apparent that the magnetic recording tape related to the present invention is excellent in any point of RF output, chrominance signal and degree of gloss, compared with the conventional one (comparative sample).

On the other hand, when the acicular ratio of finely granulated magnetic powder is not more than 1.3, the shape anisotropy becomes smaller and when it is not smaller than 4.5, the magnetic powder become brittle and Hc scatters causing the magnetic transferring, which is not desirable as a magnetic recording medium.

Further, when the grain size is larger than 0.5 μm, the S/N ratio of the magnetic recording medium caused by the size of magnetic grains becomes worse, which causes the high density recording to be difficult.

It is believed that the terms "VAGH", "GL-26D" "Estane 5701" and "Plen Act 38S" are Registered Trade Marks in one or more of the designated states.

**Claims**

1. A magnetic recording medium which comprises, on a support, a magnetic layer containing ferromagnetic powder, said ferromagnetic powder comprising ferromagnetic metallic particles with a coercive force of from 107.4 to 127.3 kA/m (1350 Oe to 1600 Oe) characterised in that these ferromagnetic particles have an average grain size of not more than 0.5 μm and the ratio of the major axis to the minor axis (acicular ratio) thereof is from 1.3 to 4.5.

2. A magnetic recording medium according to claim 1, wherein said ferromagnetic metallic powder is Fe-, Ni-, Co- or Cr-containing powder.

3. A magnetic recording medium according to claim 1 or 2 wherein said ferromagnetic powder is an iron-containing metallic powder.

4. A magnetic recording medium according to claim 3, wherein said iron-containing metallic powder is a Fe-Co-Ni, Fe-Ni-Zn, Fe-Al, Fe-Al-P, Fe-Co-Ni-Cr, Fe-Co-Ni-P, Fe-Ni, Fe-Ni-Mn, Fe-Ni-Cr-P or Fe-Ni-Co-Zn powder.

5. a magnetic recording medium according to claim 3 or 4 wherein said iron-containing metallic powder contains not less than 60% by weight iron.

7

6. A magnetic recording medium according to claim 5 wherein said iron-containing metallic powder contains not less than 80% by weight iron.

7. A magnetic recording medium according to any one of the preceding claims, wherein said ferromagnetic magnetic layer contains a binder.

8. A magnetic recording medium according to claim 7, wherein said binder is present in said magnetic layer in an amount from 5 to 400 parts by weight per 100 parts by weight of said ferromagnetic powder.

9. A magnetic recording medium according to claim 8, wherein said binder is present in said magnetic layer in an amount from 10 to 100 parts by weight per 100 parts by weight of said ferromagnetic powder.

10. A magnetic recording medium according to any one of claims 7 to 9, wherein said binder is a thermoplastic resin, thermosetting resin, radiation curable resin, reactive resin, electron-irradiation-setting resin or any mixture thereof.

11. A magnetic recording medium according to any one of the preceding claims, wherein said support is a polymeric resin, non-magnetic metal or a ceramic.

12. A magnetic recording medium according to claim 11, wherein said polymeric resin is a polyester, polyolefin, cellulose derivative, polycarbonate, polyvinylchloride, polyimide or nylon.

13. A magnetic recording medium according to claim 11, wherein said support is a non-magnetic metal support of aluminium, zinc or an alloy thereof.

14. A magnetic recording medium according to any one of the preceding claims wherein said support is in the form of a film or sheet, card, disc or cylindrical drum.

15. A magnetic recording medium according to any one of the preceding claims wherein said average grain size of said ferromagnetic particles is from 0.05 µm to 0.5 µm.

16. A magnetic recording medium according to claim 15 wherein said average grain size of said ferromagnetic particles is from 0.1 µm to 0.3 µm.

**Patentansprüche**

1. Magnetisches Aufzeichnungsmedium, das auf einem Träger eine ferromagnetisches Pulver enthaltende magnetische Schicht aufweist, wobei das ferromagnetische Pulver ferromagnetische Metallpartikel mit einer Koerzitivkraft von 107,4 bis 127,3 kA/m (1350 Oe bis 1600 Oe) umfaßt, dadurch gekennzeichnet, daß diese ferromagnetischen Partikel eine mittlere Korngröße von nicht mehr als 0,5 µm haben und das Verhältnis der Hauptachse zur Nebenachse (nadeliges Verhältnis) der Partikel von 1,3 bis 4,5 beträgt.

2. Magnetisches Aufzeichnungsmedium nach Anspruch 1, dadurch gekennzeichnet, daß das ferromagnetische Metallpulver ein Fe, Ni, Co oder Cr enthaltendes Pulver ist.

3. Magnetisches Aufzeichnungsmedium nach Anpsruch 1 oder 2, dadurch gekennzeichnet, daß das ferromagnetische Pulver ein eisenhaltiges Metallpulver ist.

4. Magnetisches Aufzeichnungsmedium nach Anspruch 3, dadurch gekennzeichnet, daß das eisenhaltige Metallpulver ein Fe-Co-Ni, Fe-Ni-Zn-, Fe-Al-, Fe-Al-P-, Fe-Co-Ni-Cr-, Fe-Co-Ni-P-, Fe-Ni-, Fe-Ni-Mn-, Fe-Ni-Cr-P- oder Fe-Ni-Co-Zn-Pulver ist.

5. Magnetisches Aufzeichnungsmedium nach Anspruch 3 oder 4, dadurch gekennzeichnet, daß das eisenhaltige Metallpulver nicht weniger als 60 Gew.-% Eisen enthält.

6. Magnetisches Aufzeichnungsmedium nach Anspruch 5, dadurch gekennzeichnet, daß das eisenhaltige Metallpulver nicht weniger als 80 Gew.-% Eisen enthält.

7. Magnetisches Aufzeichnungsmedium nach einem der vorhergehenden Ansprüche, dadurch gekennzeichnet, daß die ferromagnetische Magnetschicht ein Bindemittel enthält.

8. Magnetisches Aufzeichnungsmedium nach Anspruch 7, dadurch gekennzeichnet, daß das Bindemittel in der magnetischen Schicht in einer Menge von 5 bis 400 Masseteilen pro 100 Masseteile des ferromagnetischen Pulvers vorhanden ist.

9. Magnetisches Aufzeichnungsmedium nach Anspruch 8, dadurch gekennzeichnet, daß das Bindemittel in der magnetischen Schicht in einer Menge von 10 bis 100 Masseteilen pro 100 Masseteile des ferromagnetischen Pulvers vorhanden ist.

10. Magnetisches Aufzeichnungsmedium nach einem der Ansprüche 7 bis 9, dadurch gekennzeichnet, daß das Bindemittel ein thermoplastisches Harz, ein hitzehärtbares Harz, ein unter Einwirkung von Strahlung härtbares Harz, ein Reaktionsharz, ein durch Elektronenbestahlung härtbares Harz oder irgendeine Mischung aus diesen ist.

11. Magnetisches Aufzeichnungsmedium nach einem der vorhergehenden Ansprüche, dadurch gekennzeichnet, daß der Träger ein polymeres Harz, unmagnetisches Metall oder ein keramisches Erzeugnis ist.

12. Magnetisches Aufzeichnungsmedium nach Anspruch 11, dadurch gekennzeichnet, daß das polymere Harz ein Polyester, ein Polyolefin, ein Zellulosederivat, ein Polykarbonat, ein Polyvinylchlorid, ein Polyimid oder Nylon ist.

13. Magnetisches Aufzeichnungsmedium nach Anspruch 11, dadurch gekennzeichnet, daß der Träger ein unmagnetischer Metallträger aus Aluminium, Zink oder einer Legierung aus diesen ist.

14. Magnetisches Aufzeichnungsmedium nach einem der vorhergehenden Ansprüche, dadurch

8

**0 107 985**

gekennzeichnet, daß der Träger die Gesalt eines Films, eines Blatts, einer Karte, einer Scheibe oder einer zylindrischen Trommel hat.

15. Magnetisches Aufzeichnungsmedium nach einem der vorhergehenden Ansprüche, dadurch gekennzeichnet, daß die mittlere Korngröße der ferromagnetischen Partikel von 0,05 bis 0,5 µm beträgt.

16. Magnetisches Aufzeichnungsmedium nach Anspruch 15, dadurch gekennzeichnet, daß die mittlere Korngröße der ferromagnetischen Partikel von 0,1 µm 0,3 µm beträgt.

**Revendications**

1. Moyen d'enregistrement magnétique comprenant, sur un support, une couche magnétique contenant une poudre ferromagnétique, cette poudre ferromagnétique comprenant des particules métalliques ferromagnétiques ayant une force coercitive de 107,4 à 127,3 kA/m (1350 Oe à 1600 Oe), caractérisé en ce que ces particules ferromagnétiques présentent une dimension moyenne des grains ne dépassant pas 0,5 µm et que le rapport entre le grand axe et l'axe secondaire (rapport aciculaire) de ces grains est de 1,3 à 4,5.

2. Moyen d'enregistrement magnétique selon la revendication 1, dans lequel la poudre métallique ferromagnétique est une poudre contenant du Fe. Ni, Co ou Cr.

3. Moyen d'enregistrement magnétique selon la revendication 1 ou 2, dans lequel la poudre ferromagnétique est une poudre métallique contenant du fer.

4. Moyen d'enregistrement magnétique selon la revendication 3, dans lequel la poudre métallique contenant du fer est une poudre Fe-Co-Ni, Fe-Ni-Zn, Fe-Al, Fe-Al-P, Fe-Co-Ni-Cr, Fe-Co-Ni-P, Fe-Ni, Fe-Ni-Mn, Fe-Ni-Cr-P ou Fe-Ni-Co-Zn.

5. Moyen d'enregistrement magnétique selon la revendication 3 ou 4 dans lequel la poudre métallique contenant du fer ne contient pas moins de 60% en poids de fer.

6. Moyen d'enregistrement magnétique selon la revendication 5, dans lequel la poudre métallique contenant du fer ne contient pas moins de 80% en poids de fer.

7. Moyen d'enregistrement magnétique selon l'une quelconque des revendications précédentes, dans lequel la couche métallique ferromagnétique contient un liant.

8. Moyen d'enregistrement magnétique selon la revendication 7, dans lequel le liant est présent dans la couche magnétique dans une proportion de 5 à 400 parties en poids pour 100 parties en poids de poudre ferromagnétique.

9. Moyen d'enregistrement magnétique selon la revendication 8, dans lequel le liant est présent dans la couche magnétique dans une proportion de 10 à 100 parties en poids pour 100 parties en poids de poudre ferromagnétique.

10. Moyen d'enregistrement magnétique selon l'une quelconque des revendications 7 à 9, dans lequel le liant est une résine thermoplastique, une résine thermodurcissable, une résine durcissable par irradiation, une résine réactive, une résine durcissable par bombardement d'electrons ou un mélange de ces résines.

11. Moyen d'enregistrement magnétique selon l'une quelconque des revendications précédentes, dans lequel le support est un résine polymère, un métal non magnétique ou un matériau céramique.

12. Moyen d'enregistrement magnétique selon la revendication 11, dans lequel la résine polymère est un polyester, une polyoléfine, un dérive de la cellulose, un polycarbonate, du chlorure de polyvinyle, un polyimide ou du nylon.

13. Moyen d'enregistrement magnétique selon la revendication 11, dans lequel le support est un support en métal non magnétique, de l'aluminium, du zinc ou un de leurs alliages.

14. Moyen d'enregistrement magnétique selon l'une quelconque des revendications précédentes, dans lequels le support présente la forme d'un film ou d'une feuille, d'une plaquette, d'un disque ou d'un tambour cylindrique.

15. Moyen d'enregistrement magnétique selon l'une quelconque des revendications précédentes, dans lequel la dimension moyenne des grains des particules ferromagnétiques est de 0,05 µm à 0,5 µm.

16. Moyen d'enregistrement magnétique selo la revendication 15, dans lequel la dimension moyenne des grains des particules ferromagnétiques est de 0,1 µm à 0,3 µm.

9